# EUROPEAN PATENT APPLICATION

(11) **EP 4 353 064 A1**
(43) Date of publication of application: **17.04.2024**
(21) Application number: 23202063.6
(22) Date of filing: 06.10.2023
(51) Int. Cl.: A01C 7/08, A01C 7/10, A01C 7/06

(54) **AGRICULTURAL SYSTEM AND METHOD OF OPERATING SUCH**

(30) Priority: 13.10.2022 US 202217965192
(71) Applicant: Deere & Company, Moline, IL 61265 (US)
(72) Inventor: HARMON, ANDREW W, 68163 Mannheim (DE); SPYROPOULOS, AMANDA D, 68163 Mannheim (DE); HAYES, JARED A, 68163 Mannheim (DE)
(74) Representative: Reichert, Christian

(57) **Abstract**

An agricultural system (100) is disclosed. The agricultural system (100) comprises a cart (110) including an air source (116) configured to generate an air flow; and a plurality of product containers (112); an implement (120) including a plurality of tanks (124); and a plurality of valves (122) respectively associated with the plurality of tanks; and a shared chute (130) extending between the cart (110) and the implement (120) through which product from the plurality of product containers (112) is conveyed via the air source to the plurality of tanks (124). Further, a method of operating such agricultural system (100) is disclosed.

## Description

### BACKGROUND

A commodity cart or air cart is a machine that stores quantities of one or more commodities or products on a mobile platform. An agricultural vehicle may tow or push the cart in addition to a tool or implement for applying the products in a field. In one use-case, the agricultural vehicle transports the tool and cart through a field. The cart conveys product to the tool for deposition on the field.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

In one implementation, a system is provided. The system includes a cart having an air source configured to generate an air flow and a plurality of product containers. The system also includes an implement having a plurality of tanks and a plurality of valves respectively associated with the plurality of tanks. The system further includes a shared chute extending between the cart and the implement through which product from the plurality of product containers is conveyed via the air source to the plurality of tanks.

In another implementation, a method is provided. The method includes depositing one or more products from one or more product containers to a first portion of a chute as a plurality of packets. The method also includes conveying the plurality of packets along the chute via an air source. In additions, the method includes detecting arrival of a packet, of the plurality of packets, at a second portion of the chute. Further, the method includes operating a valve associated with a product tank corresponding to a product of the packet, in response to detecting the arrival of the packet, to capture the packet and deposit the packet into the product tank.

In yet another implementation, an air cart is provided. The air cart includes a plurality of product containers configured to store one or more products. The air cart can also include a shared chute to deliver the one or more products received from the plurality of product containers. In addition, the air cart includes an air source configured to convey the one or more products through the shared chute. Further, the air cart can include a plurality of feeders associated with the plurality of product containers. The plurality of feeder are configured to deposit product from the plurality of product containers as a plurality of packets. The packets of the plurality of packets are separated in the shared chute by a predetermined gap.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

Various non-limiting embodiments are further described in the detailed description given below with reference the accompanying drawings, which are incorporated in and constitute a part of the specification.
Fig. 1 illustrates an exemplary, non-limiting implementation of a system having an air cart and an implement according to various aspects.
Fig. 2 illustrates an exemplary, non-limiting implementation for conveying product from a container to an implement according to various aspects.
Fig. 3 illustrates an exemplary, non-limiting implementation for conveying product from a container to an implement according to various aspects.
Fig. 4 illustrates an exemplary, non-limiting implementation for conveying product from a container to an implement according to various aspects.
Fig. 5 illustrates an exemplary, non-limiting implementation for conveying product from a container to an implement according to various aspects.
Fig. 6 illustrates an exemplary, non-limiting implementation for conveying product from a container to an implement according to various aspects.
Fig. 7 is a flowchart of an exemplary, non-limiting implementation of multiplexing conveyance of products.

### DETAILED DESCRIPTION

As described above, an air cart may be utilized in connection with an implement to deposit a commodity onto a field. The implement, according to various examples, may be an air seeder or a planter. For instance, the implement may include, but is not limited to, an air drill, a no-till air drill, a high-precision opener, a box drill, a precision planter, etc. The implement may also include attachment for fertilizer or other products (e.g. fungicide, etc.).

Some air cart solutions treat the air cart as a sole metering element in a system. Such solutions include a complex meter involving multiple rollers or other device to measure a particular volume of product and respectively deposit the product into a hose for conveyance to the implement. Implement or tool complexity, however, continues to increase. A part of this complexity is enabled via more precise metering at the tool itself. Accordingly, existing solutions involve a meter on the air cart, which is designed to provide generic, all-purpose metering suitable for most products. Specific products, however, may involve re-metering at the implement by a more complicated and/or more precise metering element.

Moreover, in implementation where the air cart stores multiple products, the products on conveyed to respective tools via respective hoses or channels. Accordingly, to increase the number of products conveyed - or to increase a number of source tanks for a particular product - on the cart, additional channels and/or hoses are also added.

An air cart and conveyance technique are described herein that reduce complexity and cost in view of increasing precision and engineering at the implement level. According to an aspect, a multiplex air cart is described. The air cart includes a shared channel (e.g. a shared chute, hose, or pipe) that feeds multiple downstream tanks or tools. The air cart provides a lower cost, simpler implementation that excels at nursing without redundant precision rate control or metering. For instance, the implementation can include few meters, can reduce a size of the air flow systems, and/or eliminate tank pressure systems. Further, routing complexity is reduced with the introduction of the shared channel. Moreover, with reduced complexity, existing air carts may be retrofit with the solution described herein. That is, the solution described herein may fit on the frame of existing carts and/or may be utilized with existing tanks.

The multiplex air cart may include other channels or chutes in addition to the shared channel. For instance, the shared chute may be multiplex and convey product from a plurality of tanks and a second chute may be, for example, a dedicated chute for a particular product. This configuration may be useful for situations where one product is utilized in a higher volume than other products.

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

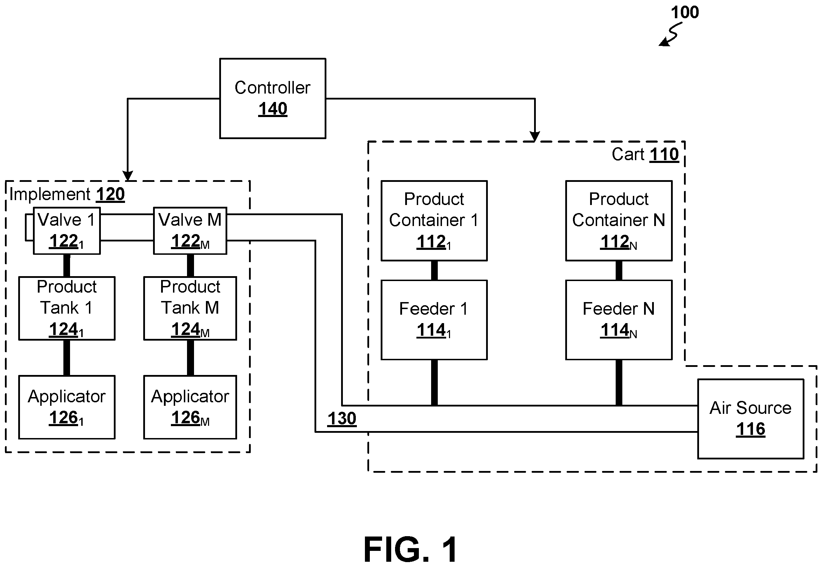

Referring initially to Fig. 1, an agricultural system 100 for conveying one or more products from a cart 110 to an implement 120 is illustrated. As shown in Fig. 1, a shared channel or chute 130 is depicted extending between cart 110 and implement 120 to convey the one or more products. Accordingly, any product provided by cart 110 to implement 120 travels along the channel 130.

In an exemplary implementation, cart 110 may carry a plurality of products or commodities. As such, cart 110 can include a plurality of product containers 112₁...112_{N} (where N is any integer greater than or equal to one), which are collectively referred to as containers 112 or individually referred to as container 112 in a general manner. Each product container 112 may have an associated feeder 114 (shown in Fig. 1 as feeders 114₁...114_{N}). As with containers 112, the feeders 114₁...114_{N} may collectively be referred to as feeders 114 and/or singly and generally referred to as feeder 114. Feeders 114 may deposit quantities of product from respectively associated containers 112 onto channel 130 for conveyance to implement 120. Feeders 114 may be, for example, rollers, shutters, valves, doors, or other mechanism capable of selectively opening and closing to deposit product to channel 130.

Once placed on channel 130, product may be conveyed via the channel 130 to implement 120 via an air source 116. Air source 116, according to examples, may be a blower or fan, or include several fans and blowers. Air source 116, according to an aspect, creates a current of air in channel 130 sufficient to carry product through channel 130 to implement 120 at a desired flow rate.

As shown in Fig. 1, implement 120 may include a single tool or implement, or a plurality of tools or implements. Specifically, implement 120 may include a plurality of product tanks 124 respectively associated with a plurality of valves 122 and a plurality of applicators 126. In Fig. 1, the plurality of tanks 124 are shown as tanks 124₁...124_{M}; the plurality of valves are depicted as valves 122₁...122_{M}; and the plurality of applicators are illustrated as applicators 126₁...126_{M}, where M is any integer greater than or equal to one. Tanks 124₁...124_{M} may be collectively referred to as tanks 124 or individually and generally as tank 124; valves 122₁...122_{M} may be collectively referred to as valves 122 or individually and generally as valve 122; and applicators 126₁...126_{M} may be collectively referred to as applicators 126 or individually and generally as applicator 126 Product tanks 124 may store quantities of product delivered via channel 130 from product containers 112. In some examples, a capacity of tanks 124 may be less than containers 112; however, the aspects described herein are limited to this example. Product tanks 124 may stage product transiently for later application by applicators 126. As described above, implement 120 may include various air seeders and/or planters with additional attachments for fertilizers or other products. Accordingly, applicators 126 include components, machines, and devices to achieve these functions. Further, applicators 126 may include metering elements for precision metering as described above.

Valves 122 operate to selectively capture quantities of product conveyed via channel 130 and deposit the product into the associated tanks 124. In particular, valves 122 may open to enable product to enter tanks 124 and remain closed to prevent product from entering tanks 124. Thus, a plurality of products may be conveyed via the shared channel 130 without products mixing. Valves 122 may be any suitable valve, door, shutter, or other mechanism capable of selectively opening and closing to deposit product into an associated tank 124 when opened and enable bypass of product through channel 130 when closed (i.e. to proceed to a subsequent tank 124).

In addition, as shown in Fig. 1, system 100 may include a controller 140. In an aspect, controller 140 may be a computing device having a processor capable of executing computer-executable instructions stored on one or more computer-readable media include non-transitory, computer-readable storage media. By way of illustration, controller 140 may be implemented as a system-on-a-chip (SOC) or other integrated computing system. Controller 140 includes various inputs to receives signals or data from components or sensors (not shown) of system 100 indicative of a status of containers 112, feeders 114, air source 116, valves, 122, tanks 124, applicators 126, and/or channel 130. For example, inputs may indicate whether a valve 122 is open or closed, flow rate and/or position of product in channel 130, fill level of tanks 124 and/or containers 112, a state of a feeder 114, etc. Controller 140 may also output various signals (e.g. control signals) to components of system 100. For instance, feeders 114 and/or valves 122 may be electrically actuated and/or digitally controlled. Accordingly, controller 140 can control when feeders 114 and/or valves 122 operate. For example, controller 140 may control opening of a valve 122 to capture a quantity of product being conveyed via channel 130 and close the valves 122 to enable product to bypass to a later tank on the path.

While Fig. 1 depicts equal numbers of product containers 112 and product tanks 124, it is to be appreciated that the number of tanks 124 of implement 120 may differ from the number of containers 112 of cart 110. Further, it is to be appreciated that a number of applicators 126 may differ from a number of tanks 124 in some implementation despite being shown in equal quantities in Fig. 1. For instance, one tank 124 may feed multiple applicators 126, or one applicator 126 may be feed by multiple tanks 124. Further, a tank 124 may have more than one valve 122. For instance, an elongated tank 124 may have plural valves 122 to enable level filling.

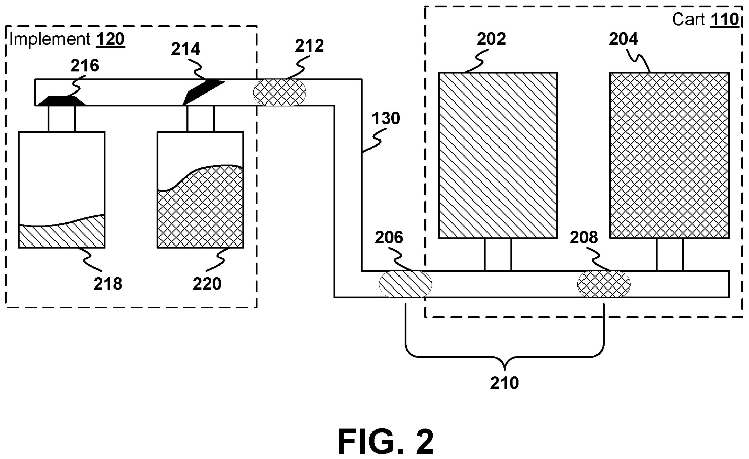

Turning to Figs. 2-6, various features and operations of system 100 are schematically illustrated. The examples in these figures are illustrative of some operations system 100 may perform, but is not exhaustive. It is to be appreciated that additional scales or arrangements are possible, and are contemplated to be within the scope of this disclosure. Moreover, some components of system 100 have been omitted from Figs. 2-6 for clarity. In addition, some components of system 100 are referred to with equivalent terminology and alternative reference numerals to enhance understanding of the described feature. One of ordinary skill in the art will appreciate correlations between Figs. 2-6 and the system 100 of Fig. 1.

Referring now to Fig. 2, cart 110 and implement 120 are shown with channel or chute 130 extending therebetween. In the example of Fig. 2, cart 110 includes a first container 202 housing a first product and a second container 204 housing a second product. Cart 110 deposits product from containers 202 and 204 onto channel 130 in the form of packets, such as packet 206 of the first product, and packets 208, 212 of the second product.

The packets travel along channel 130 from cart 110 to implement 120. In the example of Fig. 2, implement 120 may include a first tank 218 for the first product and a second tank 220 for the second product. Tank 220 has an associated valve 214 and tank 218 is associated with valve 216. Valves 214 and 216 may selectively opened to enable product to be captured by tanks 222 and 218, respectively, or remain close to prevent an incorrect product from entering a wrong tank. Fig. 2 illustrates valve 214 in an open state ready to capture packet 212 of the second product and deposit packet 212 into tank 220.

As shown in Fig. 2, packets 206, 208, and 212 coexist on channel 130. The packets may be separate on channel 130 by a gap. For example, packet 206 and packet 208 are separated by gap 210. Gap 210 allows multiple products to travel channel 130 without mixing and further enables valves 214 and 216 to operate to capture a packet before a subsequent packet arrives.

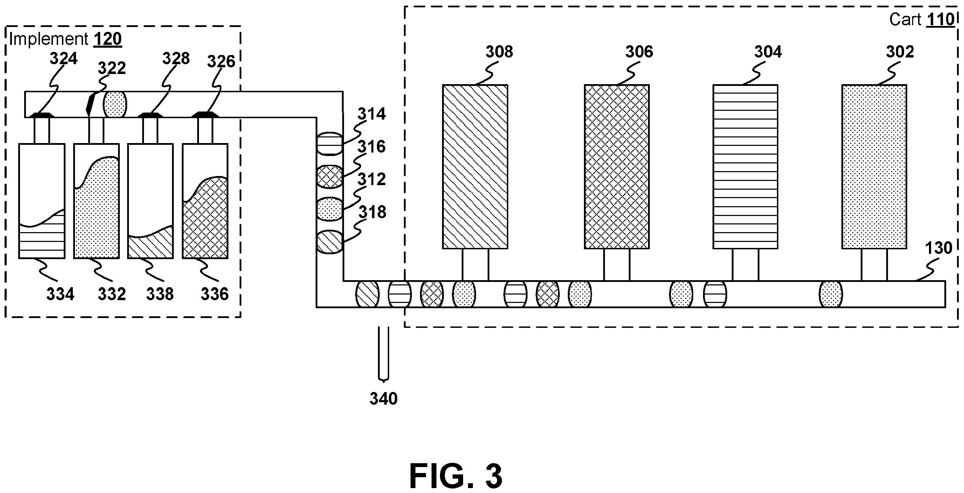

Fig. 3 illustrates another exemplary implementation of system 100. In Fig. 3, cart 110 includes a first tank 302 storing a first product, a second tank 304 storing a second product, a third tank 306 storing a third product, and a fourth tank 308 storing a fourth product. The products may be deposited to channel 130 in the form of packets such as packet 312 (first product), packet 314 (second product), packet 316 (third product), and packet 318 (fourth product).

In the example of Fig. 3, implement 120 includes a first tank 332 for the first product, a second tank 334 for the second product, a third tank 336 for the third product, and a fourth tank 338 for the fourth product. Each tank 332-338 has an associated valve 322-328 as shown in Fig. 3. Valves 322-328 are similar in operation to valves 214 and 216 of Fig. 2. Fig. 3 illustrates valve 322 open to capture a packet of the first product. In this example, valves 328 and 326 are closed which allowed the packet of the first product to bypass the second tank 336 and the fourth tank 338.

The packets in Fig. 3 are illustrated being separated by a gap 340. As with gap 210, gap 340 allows multiple products to travel channel 130 without mixing and further enables the valves to operate to capture packets before subsequent packets arrive. In an aspect, system 100 may define a minimum gap. The minimum gap may be determined according to a minimum time required to cycle a valve open and closed, a flow rate of product in channel 130, a speed of packets in the channel 130, and/or a latency associated with sensor signals input to controller 140 and control signals output from controller 140. It is to be appreciated that the minimum gap may change as components of system 100 improve. For instance, improved valves that open more rapidly than prior valves and/or faster processing of controller 140 may enable the minimum gap to decrease.

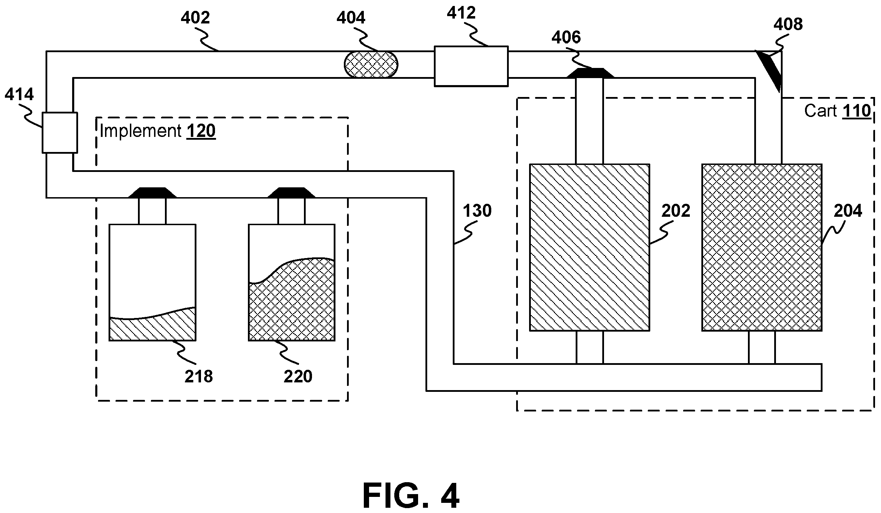

Turning now to Fig. 4, illustrated is another example of a multiplex conveyance system. Fig. 4 is similar to the example of Fig. 2 but additionally includes a return path or channel 402. Return path 402 allows errant product flow to return to cart 110. As utilized herein, errant product flow is product flow that is not captured by a tank of implement 120. In Fig. 4, an errant packet 404 of the second product is shown on the return path 402. First container 202 and second container 204 may be associated with valves 406 and 408, respectively. Valves 406 and 408 operate similar to valves 214 and 216 and allow errant product to be returned to the appropriate container. For example, in Fig. 4, valve 406 is closed and valve 408 is open. This configuration allows errant packet 404 to bypass the first container 202 and be captured by second tank 204.

In a further aspect, a flow sensor 414 is included to detect product flow beyond implement 120. Flow sensor 414 detects errant flow and enables the system to control valves 406, 408 to facilitate return of the errant product. Additional flow can be injected into the return path 402 by an additional source 412, such as compressed air, an additional fan, a line vac, etc., to raise packet velocity. For example, the additional source 412 may be located on the return path 402 to boost errant packet 404 to enable sufficient speed to travel the return path 402.

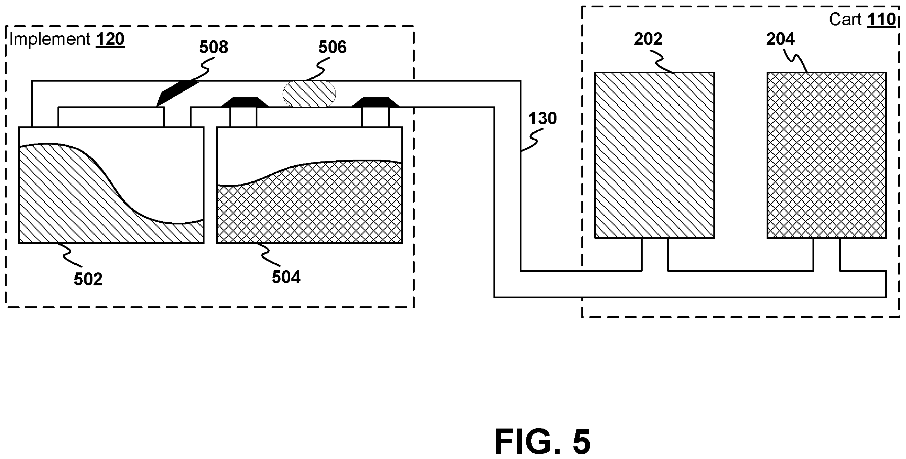

Fig. 5 illustrates another example of system 100 where implement 120 includes elongated and/or narrow tanks such as tank 502 for a first product and a tank 504 for a second product. As shown in Fig. 5, tanks 502 and 504 may include multiple valves or entry points for products. Selective operation of the multiple valves and/or utilization of the multiple entry points enables level filling of tanks 502 and 504. For example, Fig. 5 illustrates valve 508 open to capture packet 506 at an entry point where the fill level of tank 502 is lower.

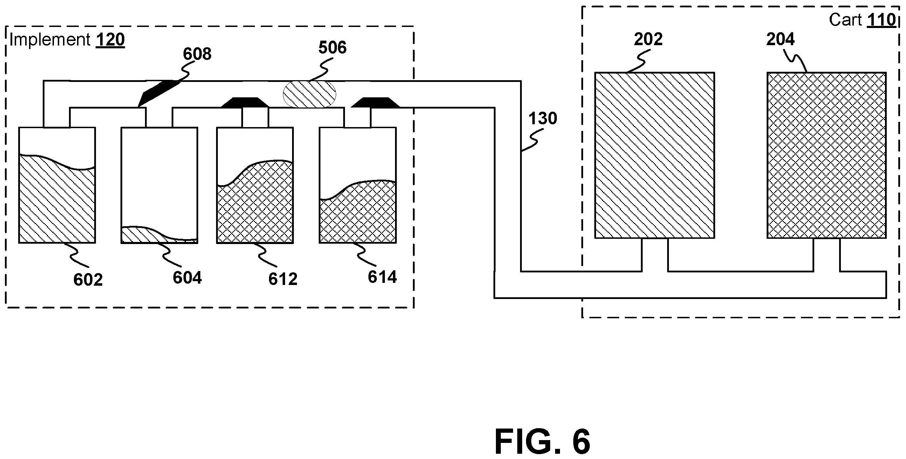

According to another example, which is shown in Fig. 6, implement 120 may include more than one tank per product. For instance, implement 120 may include tanks 602 and 604 for a first product, and tanks 612 and 614 for a second product. Each tank may have an associated valve to enable individual filling. In Fig. 6, valve 608 is shown open to capture packet 606 of first product, which will be deposited in tank 604.

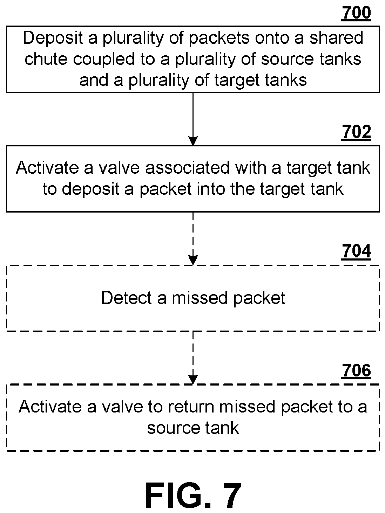

Referring now to Fig. 7, a method for multiplexing conveyance of product is illustrated. The method may be performed by system 100 described above. In particular, the method of Fig. 7 may be implemented to convey multiple products from an air cart to one or more tools. At 700, a plurality of packets of products are deposited onto a shared chute or channel. The shared channel is coupled to a plurality of source tanks and a plurality of target tanks. The plurality of source tanks and target tanks may be associated with a plurality of different products. At 702, a valve associated with a particular target tank is actuated to deposit a packet of a particular product into the tank. In optional steps, a missed packet may be detected at 704. A missed packet is a packet that is not captured by any target tank, for example. At 706, a valve, associated with a particular source tank, is activated to facilitate return of the missed packet to the source tank.

According to an aspect, a system is described. The system includes a cart having an air source an air source configured to generate an air flow and a plurality of product containers. The system further includes an implement having a plurality of tanks and a plurality of valves respectively associated with the plurality of tanks. The system also includes a shared chute extending between the cart and the implement through which product from the plurality of product containers is conveyed via the air source to the plurality of tanks.

In an example, the cart further includes a plurality of feeders respectively associated with the plurality of product containers. Each feeder of the plurality of feeders is configured to deposit product from an associated product container to the chute for conveyance to the implement. The product from the plurality of product containers is conveyed via the chute as packets. The packets are separated in the chute by an air gap.

In further examples, each valve of the plurality of valves is configured to open to capture product, conveyed from a product container of the plurality of product container, and store the product in an associated tank. Each valve of the plurality of valves, when closed, prevents product from entering an associated tank.

According to another example, the implement further includes one or more tools to distribute product from the plurality of tanks. The implement further includes one or more meters to measure specific amounts of product for distribution.

In yet another example of the system, the shared chute further includes a return path to return errant product flow to the plurality of product containers. The system may include an additional air source positioned on the return path to raise packet velocity. In addition, the system may include a flow sensor positioned along the chute after the plurality of tanks, wherein the flow sensor is configured to detect the errant product flow.

Still further, the system may include a controller configured to operate at least one of the plurality of valves or the plurality of feeders to distribute product from the plurality of product containers to the plurality of tanks based on a timing.

In another aspect, a method is provided. The method includes depositing one or more products from one or more product containers to a first portion of a chute as a plurality of packets. The method also includes conveying the plurality of packets along the chute via an air source. The method further includes detecting arrival of a packet, of the plurality of packets, at a second portion of the chute. In addition, the method includes operating a valve associated with a product tank corresponding to a product of the packet, in response to detecting the arrival of the packet, to capture the packet and deposit the packet into the product tank.

In some examples of the method, detecting arrival of the packet includes detecting the packet with a sensor. The plurality of packets are separated by an air gap in the chute. The plurality of packets include packets for two or more products, and the method further includes depositing the plurality of packets in accordance with an order. The order is based on at least one of a type of product or a flow rate of a product. The method may further include operating a plurality of valves associated with a plurality of tanks in accordance with the order.

In yet another aspect, an air cart is described. The air cart includes a plurality of product containers configured to store one or more products. The air cart further includes a shared chute to deliver the one or more products received from the plurality of product containers. The air cart also includes an air source configured to convey the one or more products through the shared chute. In addition, the air cart includes a plurality of feeders associated with the plurality of product containers, the plurality of feeder being configured to deposit product from the plurality of product containers as a plurality of packets. In an example, packets of the plurality of packets are separated in the shared chute by a predetermined gap.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Terms of orientation used herein, such as "top," "bottom," "horizontal," "vertical," "longitudinal," "lateral," and "end" are used in the context of the illustrated embodiment. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a cross-sectional region that can be measured from side-to-side. Terms relating to shapes generally, such as "circular" or "cylindrical" or "semicircular" or "semi-cylindrical" or any related or similar terms, are not required to conform strictly to the mathematical definitions of circles or cylinders or other structures, but can encompass structures that are reasonably close approximations.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list. Overall, the language of the claims is to be interpreted broadly based on the language employed in the claims. The language of the claims is not to be limited to the non-exclusive embodiments and examples that are illustrated and described in this disclosure, or that are discussed during the prosecution of the application.

Although systems and methods for a multiplex air cart have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for multiplex air cart. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, subcombinations, and rearrangements of systems, methods, features, elements, modules, blocks, and so forth are within the scope of this disclosure. The use of sequential, or time-ordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated. Components can be added, removed, and/or rearranged. Further, the disclosure herein of any particular feature, aspect, method, property, characteristic, quality, attribute, element, or the like in connection with various embodiments can be used in all other embodiments set forth herein. Additionally, any methods described herein may be practiced using any device suitable for performing the recited steps.

The methods disclosed herein may include certain actions taken by a practitioner; however, the methods can also include any third-party instruction of those actions, either expressly or by implication. For example, actions such as "positioning an electrode" include "instructing positioning of an electrode."

The ranges disclosed herein also encompass any and all overlap, subranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

## Claims

1. An agricultural system (100), comprising:
a cart (110) including:
an air source (116) configured to generate an air flow; and
a plurality of product containers (112);
an implement (120) including:
a plurality of tanks (124); and
a plurality of valves (122) respectively associated with the plurality of tanks; and
a shared chute (130) extending between the cart (110) and the implement (120) through which product from the plurality of product containers (112) is conveyed via the air source to the plurality of tanks (124).

2. The agricultural system of claim 1, wherein the cart (110) further includes a plurality of feeders (114) respectively associated with the plurality of product containers (112), and
wherein each feeder (114) of the plurality of feeders (114) is configured to deposit product from an associated product container (112) to the chute (130) for conveyance to the implement (120).

3. The agricultural system of claim 1 or 2, wherein product from the plurality of product containers (112) is conveyed via the chute (130) as packets (206, 208, 212, 312, 314, 316, 318) and
wherein the packets (206, 208, 212, 312, 314, 316, 318) are separated in the chute (130) by an air gap (210, 340).

4. The agricultural system of one of the claims 1 to 3, wherein each valve (122) of the plurality of valves is configured to open to capture product, conveyed from a product container (112) of the plurality of product container, and store the product in an associated tank (124).

5. The agricultural system of one of the claims 1 to 4, wherein each valve (122) of the plurality of valves, when closed, prevents product from entering an associated tank (124).

6. The agricultural system of one of the claims 1 to 5, wherein the implement (120) further includes one or more tools (126) to distribute product from the plurality of tanks (124), and
wherein the implement further includes one or more meters to measure specific amounts of product for distribution.

7. The agricultural system of one of the claims 1 to 6, wherein the shared chute (130) further includes a return path (402) to return errant product flow to the plurality of product containers (112).

8. The agricultural system of one of the claims 1 to 7, further comprising an additional air source (412) positioned on the return path (402) to raise packet velocity.

9. The agricultural system of one of the claims 1 to 8, further comprising a flow sensor (414) positioned along the chute (130) after the plurality of tanks (124), wherein the flow sensor (414) is configured to detect the errant product flow.

10. The agricultural system of one of the claims 2 to 9, further comprising a controller (140) configured to operate at least one of the plurality of valves (122) or the plurality of feeders (114) to distribute product from the plurality of product containers (112) to the plurality of tanks (124) based on a timing.

11. A method of operating an agricultural system (100) according to one or more of the claims 1 to 10, the method comprising:
depositing (700) one or more products from one or more product containers to a first portion of a chute as a plurality of packets;
conveying the plurality of packets along the chute via an air source;
detecting arrival of a packet, of the plurality of packets, at a second portion of the chute; and
operating (702) a valve associated with a product tank corresponding to a product of the packet, in response to detecting the arrival of the packet, to capture the packet and deposit the packet into the product tank.

12. The method of claim 11, wherein detecting arrival of the packet comprising detecting the packet with a sensor.

13. The method of claim 11 or 12, wherein the plurality of packets are separated by an air gap in the chute.

14. The method of one of the claims 11 to 13, wherein the plurality of packets include packets for two or more products, and wherein the method further comprises depositing the plurality of packets in accordance with an order, wherein the order is based on at least one of a type of product or a flow rate of a product.

15. The method of one of the claims 11 to 14, further comprising operating a plurality of valves associated with a plurality of tanks in accordance with the order.
